# FASCICULE DE BREVET EUROPEEN

(11) **EP 0 409 675 B1**
(45) Date de publication et mention de la délivrance du brevet: **12.04.1995**
(21) Numéro de dépôt: 90401718.3
(22) Date de dépôt: 19.06.1990
(51) Int. Cl.: G11B 5/48, G11B 5/49, G11B 15/12, G11B 5/187, G11B 5/23

(54) **Tête d'enregistrement magnétique multipiste à grand contraste de champ**
Mehrspur-Magnetkopf mit grossem Feldkontrast
Multitrack magnetic head with high field contrast

(30) Priorité: 21.07.1989 FR 8909887
(43) Date de publication de la demande: 23.01.1991
(73) Titulaire: THOMSON-CSF, 75008 Paris (FR)
(72) Inventeur: Maurice, François, F-92045 Paris La Défense (FR)
(74) Mandataire: Chaverneff, Vladimir

(56) Documents cités:
- FR-A- 1 511 893
- US-A- 3 500 347
- US-A- 3 510 855
- US-A- 3 562 759
- US-A- 3 662 361

## Description

La présente invention se rapporte à une tête d'enregistrement magnétique multipiste à grand contraste de champ.

Dans les têtes d'enregistrement magnétique multipistes à réseau dense de micro-têtes, à adressage matriciel, on recherche un contraste maximal de champ d'écriture entre micro-têtes excitées et micro-têtes au repos. Les têtes connues de ce type ont en général un contraste de champ au mieux égal à trois environ.

Des têtes connues, par exemple d'après FR-A- 2 588 406, présentent un contraste de champ plus élevé, mais ceci est obtenu par chauffage au-delà de son point de Curie d'un matériau magnétique disposé dans le circuit magnétique. Un tel matériau doit cependant réunir un ensemble de caractéristiques (point de Curie, résistivité, aimantation à saturation) difficiles à obtenir simultanément.

La présente invention a pour objet une tête d'enregistrement magnétique multipiste à réseau dense de micro-têtes, présentant un contraste de champ le plus élevé possible entre micro-têtes excitées et micro-têtes au repos, tout en ayant une bonne efficacité d'écriture, et dont la réalisation soit la plus simple possible et peu onéreuse.

La tête magnétique d'enregistrement multipiste à grand contraste de champ conforme à l'invention, du type à structure matricielle compacte de micro-têtes magnétiques et commande par inhibition, comprenant une matrice de plots en matériau magnétique faisant saillie sur un substrat support en matériau magnétique, des conducteurs électriques étant disposés en matrice dans les espaces inter-plots, des fils de commande étant disposés en lignes, et des fils de données étant disposés en colonnes, est caractérisée en ce que chaque micro-tête comporte un circuit magnétique formé par quatre plots voisins, la partie du substrat les joignant, et deux pôles en matériau magnétique, chaque pôle reliant magnétiquement deux plots de la même colonne de plots, ces deux pôles venant à proximité l'un de l'autre au niveau du croisement de conducteurs électriques en définissant un entrefer.

Une tête d'enregistrement magnétique multipistes conforme au préambule de la revendication 1 est connue de US-A-3 662 361.

La présente invention sera mieux comprise à la lecture de la description détaillée de plusieurs modes de réalisation, pris comme exemples non limitatifs et illustrés par le dessin annexé, sur lequel :
- la figure 1 est une vue en plan partielle et schématique d'une tête magnétique de l'art antérieur,
- la figure 2 est une vue en plan partielle et schématique d'une tête magnétique conforme à l'invention,
- les figures 3 à 6 sont des vues de variantes de formes de pôles pouvant être formés sur la tête magnétique conforme à l'invention,
- la figure 7 est un diagramme montrant l'effet d'inhibition en fonction du courant appliqué sur les lignes et colonnes du réseau de fils' conducteurs de la tête de la figure 2,
- les figures 8 et 9 sont des exemples de chronogrammes de tensions de commande de la tête de la figure 2, et
- la figure 10 est une vue d'une variante de pôles conformes à l'invention, à symétrie géométrique par rapport à un point.

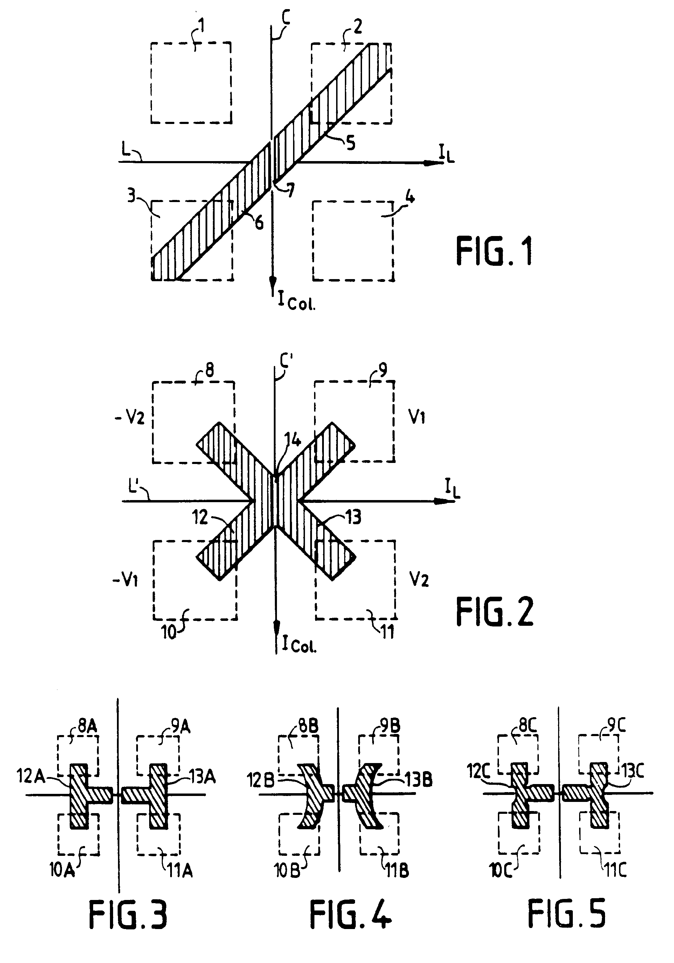

On a schématiquement représenté en figure 1 une partie de tête magnétique matricielle d'enregistrement de l'art antérieur. Cette tête comporte un réseau cartésien de plots magnétiques de section sensiblement carrée formés par exemple par rainurage sur un substrat en matériau magnétique tel que du ferrite. On a représenté sur la figure 1 quatre de ces plots en traits interrompus, référencés 1 à 4. Des fils de lignes L et de colonnes C sont disposés dans les rainures déterminées entre ces plots. Par convention, on supposera tout au long de la présente description que les fils de ligne sont ceux dans lesquels on envoie un courant de sélection, et que les fils de colonnes sont ceux auxquels on envoie les données inscrites par la tête sur un support magnétique d'enregistrement (bande ou disque magnétique). On forme sur des plots disposés symétriquement par rapport au croisement d'un conducteur C et d'un conducteur L, par exemple les plots 2 et 3, et sur le matériau non magnétique remplissant l'espace inter-plots, des pôles 5,6 respectivement. Ces pôles ont par exemple la forme de bandes disposées à 45° par rapport aux fils conducteurs C et L et se prolongent jusqu'au croisement des conducteurs C et L, en laissant subsister entre eux un entrefer 7 qui est généralement parallèle au conducteur C. Le circuit magnétique comportant les plots 2,3, leur substrat, et les pôles 5,6 constitue une micro-tête magnétique dont l'entrefer est l'entrefer 7. Dans cette tête connue, le courant de colonne seul est insuffisant pour enregistrer la bande. Lorsqu'une ligne est excitée, le champ dans l'entrefer correspondant devient trois fois plus élevé et suffisant pour enregistrer la bande.

Une telle tête connue présente un contraste de champ d'écriture de 3 entre les têtes excitées par un courant ligne et les autres.

La tête magnétique d'enregistrement conforme à l'invention définie par les revendications attenantes et partiellement représentée en figure 2, comporte des plots, tels que les plots 8 à 11, seuls représentés, similaires aux plots 1 à 4 et disposés de façon semblable. Un conducteur de colonne C′ et un conducteur de ligne L′ passent entre ces plots.

On forme des pôles 12 et 13 symétriques par rapport au conducteur C′. Le pôle 12 joint les plots 8 et 10 (qui sont disposés symétriquement par rapport au conducteur L′), et le pôle 13 joint les plots 9 et 11 (qui sont disposés symétriquement par rapport au conducteur L′). Les pôles 12 et 13 ont des parties qui se rejoignent au niveau du croisement des fils L′ et C′, un entrefer étroit (1 micron ou moins) 14 étant ménagé entre ces parties. Cet entrefer 14 est avantageusement parallèle à C′. Dans le mode de réalisation de la figure 2, les pôles 12,13 ont une forme en V, et lesdites parties qui se rejoignent sont les pointes des "V".

Selon les modes de réalisation des figures 3 à 5, ces pôles ont des formes se rapprochant plus ou moins de la forme d'un "T" dont la branche transversale joint les plots et dont la branche "verticale" se termine à l'entrefer et est rectiligne. Sur la figure 4, les pôles 12B, 13B ont leurs branches transversales incurvées. Sur la figure 5, les branches des "T" formés par les pôles 12C, 13C sont rectilignes, mais présentent un étranglement au niveau de la jonction.

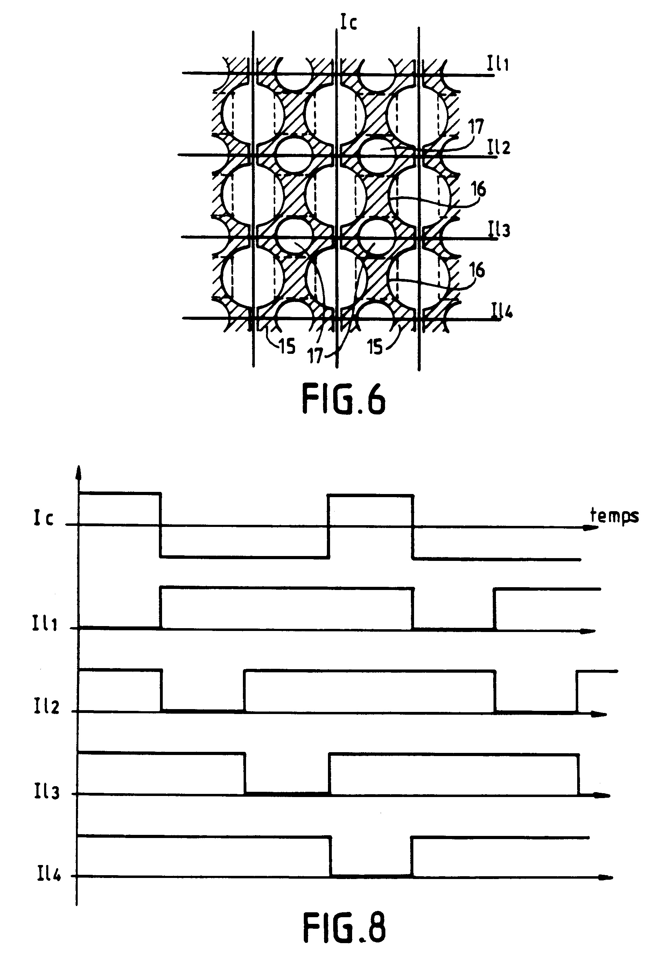

Sur la figure 6, on a représenté un mode de réalisation selon lequel les pôles reliant les plots successifs de chaque colonne de plots forment une bande continue 15. Ces bandes 15 présentent des rétrécissements 16 au-dessus des plots et des trous axiaux 17 entre les plots. Ainsi, si on considère la partie d'une bande reliant deux plots consécutifs, on voit qu'elle a sensiblement la forme d'un "V".

La caractéristique commune à tous les modes de réalisation de tête magnétique d'enregistrement décrits ci-dessus est que les pôles (en "V" ou en "T") offrent un chemin à faible réluctance magnétique pour les excitations dues aux fils de lignes, c'est-à-dire entre deux plots consécutifs de la même colonne (par exemple les plots 8 et 10 de la figure 2), ce qui fait qu'un circuit magnétique tel que celui comportant les plots 8 et 10 avec leur substrat de support et le pôle 12 peut être facilement saturé dans les conditions normales d'utilisation de la tête magnétique grâce à un courant passant dans le fil de ligne L′.

Du fait de la symétrie des circuits magnétiques par rapport au fil de ligne (L'), un courant circulant dans ce fil de ligne n'induit pratiquement aucune force magnétomotrice dans l'entrefer 14.

Lorsque l'on veut enregistrer des informations sur la piste défilant devant l'entrefer 14, on coupe le courant de L′, et l'efficacité à un courant d'excitation appliqué sur le conducteur de colonne C′ redevient normale, et a priori meilleure que celle de la tête classique de la figure 1, car la réluctance des pôles peut être inférieure dans le cas de la figure 2, grâce au double chemin offert au flux magnétique (les deux branches du "X" formé par les pôles 12,13).

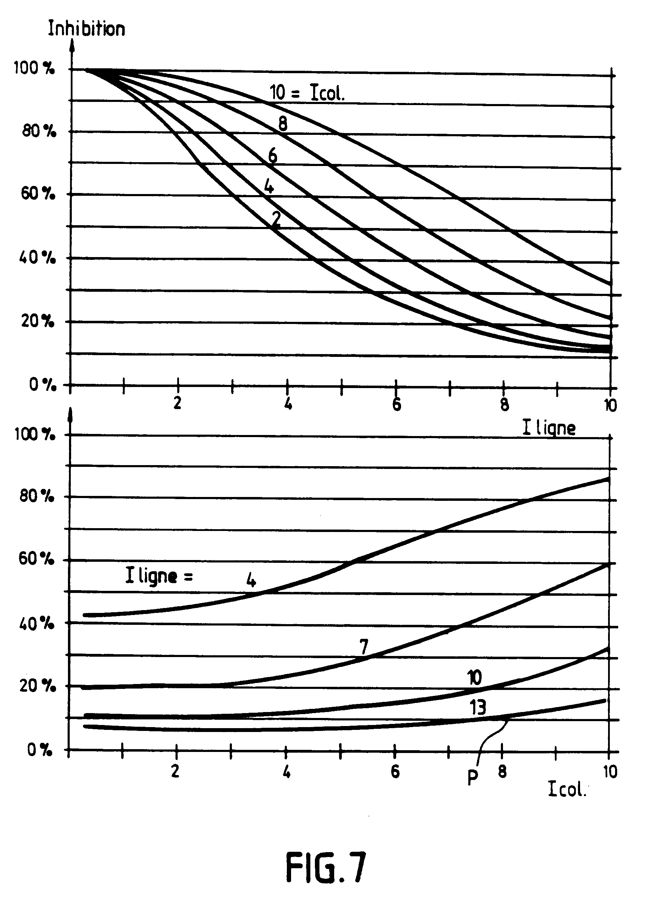

La figure 7 montre les résultats de simulations effectuées grâce à une modélisation simplifiée de la géométrie de la tête de la figure 2. Sur cette figure 7, les ordonnées des deux diagrammes sont graduées en pourcentages d'efficacité de la tête, c'est-à-dire rapport du champ dans l'entrefer avec inhibition au champ dans l'entrefer sans inhibition. Les abscisses sont, pour le diagramme du haut, des valeurs de courant de ligne, et pour le diagramme du bas des valeurs de courant de colonne, les paramètres pour les différentes courbes tracées étant respectivement le courant de colonne et le courant de ligne (en unités arbitraires).

On voit sur cette figure 7 que par exemple pour le point P (diagramme du bas) l'efficacité peut être réduite à environ 10% de sa valeur maximale grâce à l'application d'un courant de ligne inférieur au double du courant de colonne. Le contraste obtenu (10% soit 1 à 10) est environ trois fois supérieur à celui de la tête de la figure 1 (1 à 3 environ).

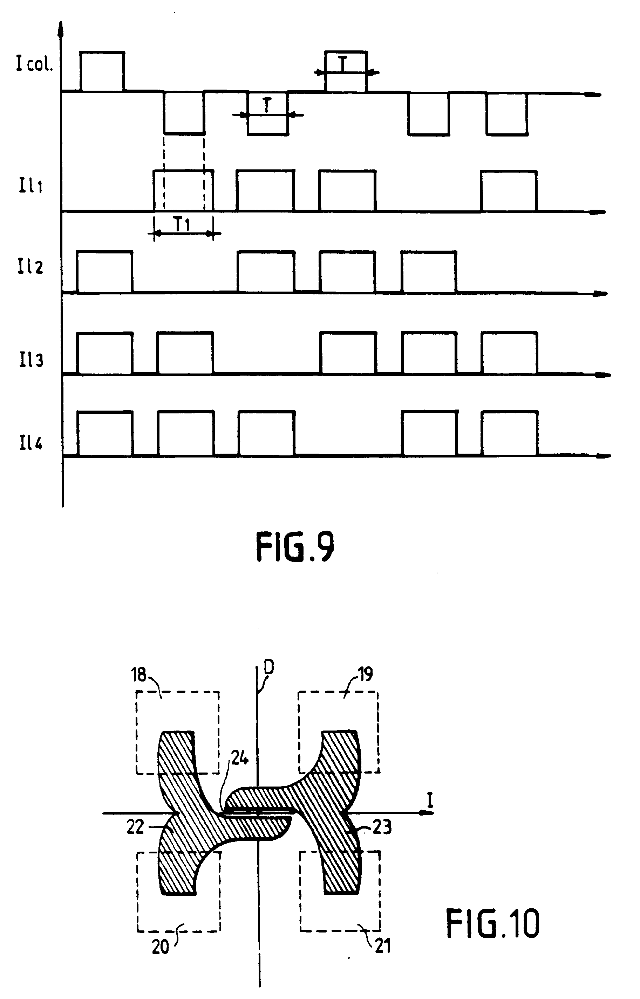

On a représenté en figure 8 un exemple de chronogramme d'excitation de la tête de l'invention. On a représenté sur la première ligne du chronogramme un signal IC à enregistrer, envoyé sur un fil de colonne, et sur les lignes suivantes du chronogramme les allures des signaux d'inhibition IL1 à IL4 envoyés à quatre lignes consécutives L1 à L4. Ces signaux IL1 à IL4 valident (désinhibent) successivement les lignes L2,L3,L4,L1,L2.

Comme indiqué en figure 9, on peut réduire les temps d'inhibition des lignes, de façon à réduire la consommation de courant de la tête.

Les lignes du chronogramme de la figure 9 sont les même que celles de la figure 8 : IC et IL1 à IL4. Pour réduire les durées d'envoi de courants d'inhibition, on envoie IC sous forme d'impulsions dont la durée T est juste suffisante pour l'acquisition par une micro-tête dont le fil de ligne est désinhibé. Par conséquent, il suffit d'envoyer sur les lignes à inhiber des impulsions dont la durée T1 est légèrement supérieure à T. Sur le chronogramme de la figure 9, la séquence d'activation des lignes est la même que pour la figure 8 : L2, L3, LA, L1, L2. La durée minimale des impulsions d'inhibition est fixée en particulier par l'inductance des fils de lignes et de colonnes.

Sur la figure 10, on a schématiquement représenté quatre plots 18 à 21, un fil de données D, un fil d'inhibition I, et deux pôles 22,23 symétriques par rapport au croisement des fils D et I. Ces deux pôles définissent un entrefer 24 parallèle au fil I.

## Revendications

1. Tête d'enregistrement magnétique multipiste à grand contraste de champ, du type à structure matricielle compacte de micro-têtes magnétiques et commande par inhibition, comprenant une matrice de plots en matériau magnétique faisant saillie sur un substrat support en matériau magnétique, des conducteurs électriques étant disposés en matrice dans les espaces inter-plots, des fils de commande (L′) étant disposés en lignes, et des fils de données (C′) étant disposés en colonnes, caractérisée par le fait que chaque micro-tête comporte un circuit magnétique formé par quatre plots voisins (8, 9, 10, 11), la partie du substrat les joignant, et deux pôles en matériau magnétique (12, 13), chaque pôle reliant magnétiquement deux plots de la même colonne de plots, ces deux pôles venant à proximité l'un de l'autre au niveau du croisement de conducteurs électriques (C′, L′) en définissant un entrefer (14).

2. Tête magnétique selon la revendication 1, caractérisée par le fait que les pôles sont en matériau facilement saturable.

3. Tête magnétique selon la revendication 1 ou 2, caractérisée par le fait qu'elle est commandée par inhibition par saturation des pôles.

4. Tête magnétique selon l'une des revendications 1 à 3, caractérisée par le fait que dans chaque micro-tête les pôles intersectent un fil de commande par inhibition (L′).

5. Tête magnétique selon la revendication 4, caractérisée par le fait que dans chaque micro-tête les pôles présentent une symétrie géométrique par rapport au fil de données (C′).

6. Tête magnétique selon la revendication 4 ou 5, caractérisée par le fait que dans chaque micro-tête les pôles présentent une symétrie géométrique par rapport au fil d'inhibition (L′).

7. Tête magnétique selon la revendication 4 ou 5, caractérisée par le fait que dans chaque micro-tête les pôles présentent une symétrie géométrique par rapport au point de croisement du fil de données et du fil d'inhibition.

8. Tête magnétique selon la revendication 5 ou 6, caractérisée par le fait que les pôles ont approximativement la forme de "V" (figures 2 et 6).

9. Tête magnétique selon la revendication 5 ou 6, caractérisée par le fait que les pôles ont approximativement la forme de "T" (figures 3 à 5).

10. Tête magnétique selon l'une des revendications précédentes, caractérisée par le fait que l'entrefer (14) défini entre pôles relatifs au même croisement de fils est sensiblement parallèle au fil de données (C').

11. Tête magnétique selon l'une des revendications 1 à 4 ou 7 à 10, caractérisée par le fait que l'entrefer (14) défini entre pôles relatifs au même croisement de fils est sensiblement parallèle au fil d'inhibition (figure 10).

## Patentansprüche

1. Magnetischer Aufzeichnungskopf mit mehreren Spuren und großem Feldkontrast nach Art einer kompakten Matrixstruktur von magnetischen Mikroköpfen mit Inhibitionssteuerung, wobei der Kopf eine Matrix von Bereichen aus magnetischem Material besitzt, die auf einem Trägersubstrat aus magnetischem Material vorstehen, und elektrische Leiter matrixartig in den Zwischenräumen zwischen den Bereichen liegen, nämlich Steuerdrähte (L′) in Zeilenrichtung und Datendrähte (C′) in Spaltenrichtung, dadurch gekennzeichnet, daß jeder Mikrokopf einen Magnetkreis enthält, der von vier benachbarten Bereichen (8, 9, 10, 11), dem sie verbindenden Teil des Substrats und zwei Polen aus magnetischem Material (12, 13) gebildet wird, wobei jeder Pol magnetisch zwei Bereiche derselben Spalte von Bereichen miteinander verbindet und diese beiden Pole in Höhe des Schnittpunkts der elektrischen Leiter (C′, L′) unter Ausbildung eines Magnetspalts (14) einander sehr nahe kommen.

2. Magnetkopf nach Anspruch 1, dadurch gekennzeichnet, daß die Pole aus leicht sättigbarem Material bestehen.

3. Magnetkopf nach Anspruch 1 oder 2, dadurch gekennzeichnet, daß er durch Inhibition mittels Sättigung der Pole gesteuert wird.

4. Magnetkopf nach einem der Ansprüche 1 bis 3, dadurch gekennzeichnet, daß in jedem Mikrokopf die Pole sich mit einem Inhibitions-Steuerdraht (L′) schneiden.

5. Magnetkopf nach Anspruch 4, dadurch gekennzeichnet, daß in jedem Mikrokopf die Pole eine geometrische Symmetrie bezüglich des Datendrahts (C′) aufweisen.

6. Magnetkopf nach Anspruch 4 oder 5, dadurch gekennzeichnet, daß in jedem Mikrokopf die Pole eine geometrische Symmetrie bezüglich des Inhibitionsdrahts (L′) besitzen.

7. Magnetkopf nach Anspruch 4 oder 5, dadurch gekennzeichnet, daß in jedem Mikrokopf die Pole eine geometrische Symmetrie bezüglich des Schnittpunkts des Datendrahts und des Inhibitionsdrahts besitzen.

8. Magnetkopf nach Anspruch 5 oder 6, dadurch gekennzeichnet, daß die Pole angenähert V-förmig sind (Figuren 2 und 6).

9. Magnetkopf nach Anspruch 5 oder 6, dadurch gekennzeichnet, daß die Pole angenähert T-förmig sind (Figuren 3 bis 5).

10. Magnetkopf nach einem der vorhergehenden Ansprüche, dadurch gekennzeichnet, daß der Magnetspalt (14), der zwischen Polen an einem Schnittpunkt der Leiter definiert ist, im wesentlichen parallel zum Datendraht (C′) verläuft.

11. Magnetkopf nach einem der Ansprüche 1 bis 4 oder 7 bis 10, dadurch gekennzeichnet, daß der Magnetspalt (14), der zwischen Polen an einem Schnittpunkt von Drähten definiert ist, im wesentlichen parallel zum Inhibitionsdraht (Figur 10) verläuft.

## Claims

1. Multitrack magnetic recording head with high field contrast, of the type with a compact matrix structure of magnetic microheads and control by inhibition, comprising a matrix of studs made of magnetic material projecting from a support substrate made of magnetic material, the electrical conductors being arranged into a matrix in the inter-stud spaces, control wires (L′) being arranged into lines and data wires (C′) being arranged into columns, characterized in that each microhead includes a magnetic circuit formed by four adjacent studs (8, 9, 10, 11), the part of the substrate joining them, and two poles made of magnetic material (12, 13), each pole magnetically linking two studs of the same column of studs, these two poles coming close to one another in the region of the intersection of electrical conductors (C′, L′) defining a gap (14).

2. Magnetic head according to Claim 1, characterized in that the poles are made of an easily saturable material.

3. Magnetic head according to Claim 1 or 2, characterized in that it is controlled by inhibition by saturation of the poles.

4. Magnetic head according to one of Claims 1 to 3, characterized in that, in each microhead, the poles intersect a control-by-inhibition wire (L′).

5. Magnetic head according to Claim 4, characterized in that, in each microhead, the poles exhibit a geometric symmetry with respect to the data wire (C′).

6. Magnetic head according to Claim 4 or 5, characterized in that, in each microhead, the poles exhibit a geometric symmetry with respect to the inhibition wire (L′).

7. Magnetic head according to Claim 4 or 5, characterized in that, in each microhead, the poles exhibit a geometric symmetry with respect to the point of intersection of the data wire and of the inhibition wire.

8. Magnetic head according to Claim 5 or 6, characterized in that the poles have approximately a "V" shape (Figures 2 and 6).

9. Magnetic head according to Claim 5 or 6, characterized in that the poles have approximately a "T" shape (Figures 3 to 5).

10. Magnetic head according to one of the preceding claims, characterized in that the gap (14) defined between poles relating to the same wire intersection is substantially parallel to the data wire (C′).

11. Magnetic head according to one of Claims 1 to 4 or 7 to 10, characterized in that the gap (14) defined between poles relating to the same wire intersection is substantially parallel to the inhibition wire (Figure 10).
